# EUROPÄISCHE PATENTANMELDUNG

(11) **EP 1 612 587 A1**
(43) Veröffentlichungstag der Anmeldung: **04.01.2006**
(21) Anmeldenummer: 05102656.5
(22) Anmeldetag: 05.04.2005
(51) Int. Cl.: G02B 6/245

(54) **Verfahren und Vorrichtung zum Reinigen eines von seiner Ummantelung befreiten Lichtwellenleiters**

(30) Priorität: 29.06.2004 DE 102004031406
(71) Anmelder: SIEMENS AKTIENGESELLSCHAFT, 80333 München (DE)
(72) Erfinder: Islinger, Jürgen, 82392, Dürnhausen (DE); Reinerth, Fridtjof, 82216, Maisach (DE)

(57) **Zusammenfassung**

Die Erfindung schafft ein Verfahren zum Reinigen eines von seiner Ummantelung befreiten Abschnitts (2a) eines Lichtwellenleiters (2), bei dem der Lichtwellenleiter-Abschnitt (2a) in eine Behandlungszelle (1) eingelegt wird, mit einer Reinigungsflüssigkeit (28) abgespritzt wird, mit Druckluft abgeblasen wird und aus der Behandlungszelle (1) entnommen wird. Das erfindungsgemäße Verfahren ermöglicht eine Reinigung unter genau definierten Bedingungen, welche in einer entsprechenden Vorrichtung auf einfache Weise durchgeführt werden kann. Bevorzugt umfasst das Anblasen des Lichtwellenleiter-Abschnitts (2a) mit Druckluft zunächst eine Beaufschlagung mit erhitzter Druckluft und nachfolgend eine Beaufschlagung mit kalter Druckluft. Die Erfindung schafft ferner eine entsprechende Reinigungsvorrichtung mit einer Behandlungszelle (1) zum Aufnehmen des Lichtwellenleiter-Abschnitts (2a), welche einen ersten Einlass (3) zum Zuführen von Druckluft, einen zweiten Einlass (4) zum Zuführen von Reinigungsflüssigkeit (28) und einen Auslass (5) zum Abführen von Druckluft und Reinigungsflüssigkeit (28) aufweist. Die Reinigungsvorrichtung ist bevorzugt als von der Umgebung abgetrenntes System ausgebildet, so dass ein Entweichen von gegebenenfalls giftigen flüssigen oder dampfförmigen Reinigungsmitteln und somit eine Gefährdung der Gesundheit einer Bedienperson zuverlässig ausgeschlossen ist.

## Beschreibung

Verfahren und Vorrichtung zum Reinigen eines von seiner Ummantelung befreiten Lichtwellenleiters

Die Erfindung betrifft ein Verfahren sowie eine Vorrichtung zum Reinigen eines von seiner Ummantelung befreiten Abschnitts eines Lichtwellenleiters, insbesondere zur Vorbereitung eines Spleißvorgangs, bei dem zwei Enden von gereinigten Lichtwellenleiter-Abschnitten thermisch miteinander verschweißt werden.

Um lichtleitende Fasern, welche häufig auch als Lichtwellenleiter oder Glasfasern bezeichnet werden, miteinander verbinden zu können, müssen die Enden der Lichtwellenleiter thermisch miteinander verschweißt werden. Dieser Vorgang wird auch als Spleißen bezeichnet. Das Spleißen erfolgt üblicherweise in speziellen Spleißvorrichtungen, wobei vor dem eigentlichen Spleißvorgang zunächst die beiden miteinander zu verbindenden Lichtwellenleiter derart zueinander positioniert werden, dass deren Endflächen ohne seitlichen Versatz einander gegenüberliegen. Der eigentliche Spleißvorgang erfolgt dann durch Zünden eines Lichtbogens zwischen zwei Elektroden, welche auf gegenüberliegenden Seiten neben den beiden Endflächen angeordnet sind.

Um eine gute Spleißverbindung zwischen zwei Lichtwellenleitern, d.h. eine Verbindung mit geringer optischer Dämpfung und hoher mechanischer Zugfestigkeit zu erhalten, müssen die Endabschnitte der Lichtwellenleiter vor dem eigentlichen Spleißvorgang gut vorbereitet werden. Hierzu gehört neben einer sehr genauen Trennung, bei der mittels eines senkrechten scharfkantigen Schnitts eine möglichst plane Endfläche eines Lichtwellenleiters erzeugt wird, auch die Reinigung des von ihrer Ummantelung befreiten Endabschnitts des Lichtwellenleiters. Die Reinigung ist deshalb erforderlich, weil bei einem Entfernen der Ummantelung, bei dem die Beschichtung üblicherweise mittels eines geeigneten Werkzeugs von dem Lichtwellenleiter abgezogen wird, häufig Reste der Ummantelung an der abgezogenen Glasfaser haften bleiben. Diese Reste können eine nachfolgende Verschweißung der Lichtwellenleiter behindern. Demzufolge erfordert eine qualitativ hochwertige Spleißverbindung einen Reinigungsvorgang, bei dem sämtliche Beschichtungsreste entfernt werden.

Für eine optimale Spleißvorbereitung gehört neben der oben genannten präzisen Trennung und der vollständigen Reinigung auch ein gerades Ausrichten der Lichtwellenleiter-Endabschnitte. Das gerade Ausrichten ist für eine präzise Positionierung der Lichtwellenleiter-Endabschnitte während des Spleißvorgangs erforderlich. Da die Ummantelung der Lichtwellenleiter üblicherweise aus Kunststoff besteht und somit häufig innere Spannungen aufbaut, welche zu einem Verzug der Lichtwellenleiter führen, ist es erforderlich, diese inneren Spannungen durch eine Erwärmung des Lichtwellenleiters abzubauen. Dann kann sich der Anschnitt eines Lichtwellenleiters, welcher nicht von seiner Ummantelung befreit wird, gerade ausrichten. Ein derartiges Ausrichten erfolgt beispielsweise durch ein Erwärmen der mit einer Ummantelung versehenen Lichtwellenleiter-Abschnitte in einem Ofen, welcher beispielsweise zwei voneinander beabstandete beheizte Platten aufweist.

Das Reinigen von Lichtwellenleiter-Endabschnitten erfolgt gemäß dem Stand der Technik üblicherweise manuell durch ein Abwischen des Lichtwellenleiter-Endabschnittes mit einem möglichst nicht fusselnden Lappen. Der Lappen ist mit einem Reinigungsmittel, bevorzugt Alkohol, getränkt. Alkohol hat den Vorteil, dass es eine sehr gute Reinigungswirkung besitzt und nach dem Verdampfen keinerlei Rückstände auf dem gereinigten Lichtwellenleiter hinterlässt. Die manuelle Reinigung mittels eines Lappens hat jedoch den Nachteil, dass die Reinigungswirkung von der Geschicklichkeit derjenigen Person abhängt, welche die Reinigung durchführt. Ein weiterer Nachteil besteht darin, dass die die Reinigung durchführende Person bei der Verwendung von manchen Reinigungsmitteln giftigen Dämpfen ausgesetzt ist.

Eine andere bekannte Methode zur Reinigung von Lichtwellenleiter-Endabschnitten ist die Reinigung in einem Ultraschallbad. Dies hat jedoch den Nachteil, dass Alkohol wegen seiner Brennbarkeit und seiner Flüchtigkeit nicht verwendet werden kann und demzufolge durch ein anderes, weniger geeignetes bzw. teureres Reinigungsmittel ersetzt werden muss.

Aus der WO 02/44778 A1 ist eine Vorrichtung zum automatischen Präparieren von Lichtwellenleitern für einen nachfolgenden Spleißvorgang bekannt. Die Vorrichtung umfasst eine Einrichtung zum Strippen eines Lichtwellenleiters, eine Einrichtung zum Reinigen des Lichtwellenleiters und eine Trenneinrichtung zum Brechen des Lichtwellenleiters, um auf einfache Weise ein von einer Ummantelung befreites, gereinigtes und mit einer planen Endfläche versehenes Lichtwellenleiter-Ende zu erzeugen.

Der Erfindung liegt die Aufgabe zugrunde, ein Verfahren sowie eine Vorrichtung zum Reinigen eines von seiner Ummantelung befreiten Endabschnitts eines Lichtwellenleiters zu schaffen, wobei eine stets vollständige Entfernung von Ummantelungsresten mittels eines auf einfache Weise automatisch durchführbaren Reinigungsvorgangs sichergestellt werden kann.

Die verfahrensbezogene Aufgabe wird gelöst durch ein Verfahren zum Reinigen eines von seiner Ummantelung befreiten Abschnitts eines Lichtwellenleiters mit den Merkmalen des unabhängigen Anspruchs 1. Der Erfindung liegt die Erkenntnis zugrunde, dass eine Kombinationsbehandlung, bei welcher der zu reinigende Lichtwellenleiter-Endabschnitt zum einen mittels einer Reinigungsflüssigkeit angespritzt und zum anderen mittels Druckluft beaufschlagt wird, eine besonders gute und auf einfache Weise automatisch durchführbare Entfernung von Ummantelungsresten ermöglicht.

Das Verfahren nach Anspruch 2 hat den Vorteil, dass ein Entweichen von flüssiger oder verdampfter Reinigungsflüssigkeit verhindert wird und somit ohne Rücksicht auf eine eventuelle Toxizität die für eine Reinigung optimale Reinigungsflüssigkeit verwendet werden kann.

Die Verwendung von Alkohol als Reinigungsflüssigkeit nach Anspruch 3 erweist sich als besonders vorteilhaft, da Alkohol zum einen eine sehr gute Reinigungswirkung hat und zum anderen sehr preiswert ist, so dass hochwertige Schweißverbindungen bei geringen Reinigungskosten erzielt werden können.

Das Verfahren nach Anspruch 4, bei dem die Reinigungsflüssigkeit unter einem schrägen Winkel auf den zu reinigenden Lichtwellenleiter-Endabschnitt aufgebracht wird, ermöglicht ein besonders effektives Entfernen von anhaftenden Ummantelungsresten. Besonders vorteilhaft erweist sich eine Ausführungsform, bei der die Reinigungsflüssigkeit unter einem Winkel von 20° bis 50° relativ zu der Längsachse des Lichtwellenleiter-Abschnitts gespritzt wird. Derzeit optimal erscheint ein Anspritzen des Lichtwellenleiters unter einem Winkel von ungefähr 30°.

Eine besonders effektive Reinigung wird gemäß Anspruch 5 durch das Vorsehen einer bestimmten Mindestmenge an Reinigungsflüssigkeit für jeden einzelnen Reinigungsvorgang erzielt.

Das Anblasen mit erhitzter Druckluft gemäß Anspruch 6 hat den Vorteil, dass die gereinigten Lichtwellenleiter-Endabschnitte, auf welchen sich häufig noch flüssige Reinigungsmittelreste befinden, schnell getrocknet werden können. Die durch das Beaufschlagen mit erhitzter Druckluft erzeugte Erwärmung des Lichtwellenleiters hat ferner den Vorteil, dass innere Spannungen des Lichtwellenleiters insbesondere in dem Bereich, welcher sich in der Nähe des von der Ummantelung befreiten Lichtwellenleiter-Endabschnittes befindet, zügig abgebaut werden und somit ein gutes Ausrichten des Lichtwellenleiters im Vorfeld eines Spleißvorgangs möglich ist.

Das Verfahren nach Anspruch 7, bei dem der Lichtwellenleiter-Endabschnitt nachfolgend mit kalter Druckluft beaufschlagt wird, hat den Vorteil, dass sowohl der Lichtwellenleiter-Endabschnitt als auch die Behandlungszelle entsprechend abgekühlt werden und somit nachfolgend eine problemlose Handhabung sowohl des Lichtwellenleiters als auch der Behandlungszelle möglich ist. Zudem wird durch die Beaufschlagung mit kalter Druckluft sichergestellt, dass gegebenenfalls vorhandene Reste der Reinigungsflüssigkeit zuverlässig entfernt werden.

Die der Erfindung zugrundeliegende vorrichtungsbezogene Aufgabe wird gelöst durch eine Vorrichtung zum Reinigen eines von seiner Ummantelung befreiten Abschnitts eines Lichtwellenleiters mit den Merkmalen des unabhängigen Anspruchs 8.

Die Ausführungsform nach Anspruch 9 hat den Vorteil, dass ein Entweichen von flüssigen oder gasförmigen Reinigungsmittelsbestandteilen zuverlässig verhindert werden kann, so dass die Durchführung der Reinigung insbesondere bei Verwendung von giftigen Reinigungsmittels erheblich erleichtert wird.

Die Vorrichtung nach Anspruch 10 ermöglicht ein leichtes Einlegen des zu reinigenden Lichtwellenleiters in die Behandlungszelle sowie ein leichtes Herausnehmen des gereinigten Lichtwellenleiters aus der Behandlungszelle. Besonders vorteilhaft erweist sich eine Ausführungsform, bei der die Behandlungszelle neben einem stationären Unterteil ein bewegliches Oberteil umfasst, welches beispielsweise mittels eines Scharniers an dem Unterteil in beweglicher Weise befestigt ist.

Die Ausführungsformen nach Anspruch 11 und Anspruch 12 haben den Vorteil, dass der zu reinigende Lichtwellenleiter-Endabschnitt von verschiedenen Seiten mit Druckluft beaufschlagt bzw. mit Reinigungsflüssigkeit angespritzt werden kann.

Die Vorrichtung nach Anspruch 13 ermöglicht durch selektives Zuführen von erhitzter bzw. kalter Druckluft eine optimale Reinigung des Lichtwellenleiter-Endabschnitts. Die Beaufschlagung mit erhitzter Druckluft ermöglicht in einem nachfolgenden Spleißvorgang ein optimales Ausrichten des zu verspleißenden Lichtwellenleiters, insbesondere des Abschnitts des Lichtwellenleiters, welcher dem von seiner Ummantelung befreiten und gereinigten Lichtwellenleiter-Endabschnitt benachbart ist. Die Beaufschlagung von kalter Druckluft ermöglicht ein zügiges Abkühlen des zuvor erwärmten Lichtwellenleiters und der zuvor erwärmten Behandlungszelle, so dass eine einfache Handhabung sowohl des Lichtwellenleiters für einen nachfolgenden Spleißvorgang als auch der Behandlungszelle für nachfolgende Reinigungsvorgänge möglich ist.

Die Ausführungsform nach Anspruch 14 hat den Vorteil, dass durch die Realisierung eines Kreislaufsystems ein wiederholtes Verwenden von Reinigungsflüssigkeit für eine Mehrzahl von Reinigungsvorgängen möglich ist. In diesem Zusammenhang wird darauf hingewiesen, dass eine Verschmutzung der Reinigungsflüssigkeit durch den Einsatz eines entsprechenden Filters eliminiert werden kann.

Die Vorrichtung nach Anspruch 15 hat den Vorteil, dass auf einfache Weise ein geschlossenes Kreislaufsystem realisierbar ist, welches das Entweichen von gegebenenfalls giftiger Reinigungsflüssigkeit bzw. giftigem Reinigungsdampf zuverlässig verhindert.

Weitere Vorteile und Merkmale der vorliegenden Erfindung ergeben sich aus der folgenden beispielhaften Beschreibung einer derzeit bevorzugten Ausführungsform.

### In der Zeichnung zeigen

- Figur 1: eine Behandlungszelle mit einem eingelegten Lichtwellenleiter, welcher einen zu reinigenden, von seiner Ummantelung befreiten Lichtwellenleiter-Endabschnitt aufweist, und
- Figur 2: ein geschlossenes Reinigungssystem mit der in Figur 1 dargestellten Behandlungszelle.

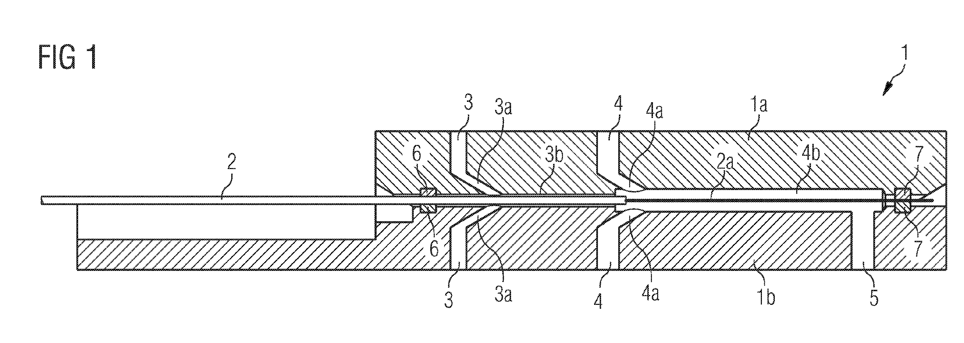

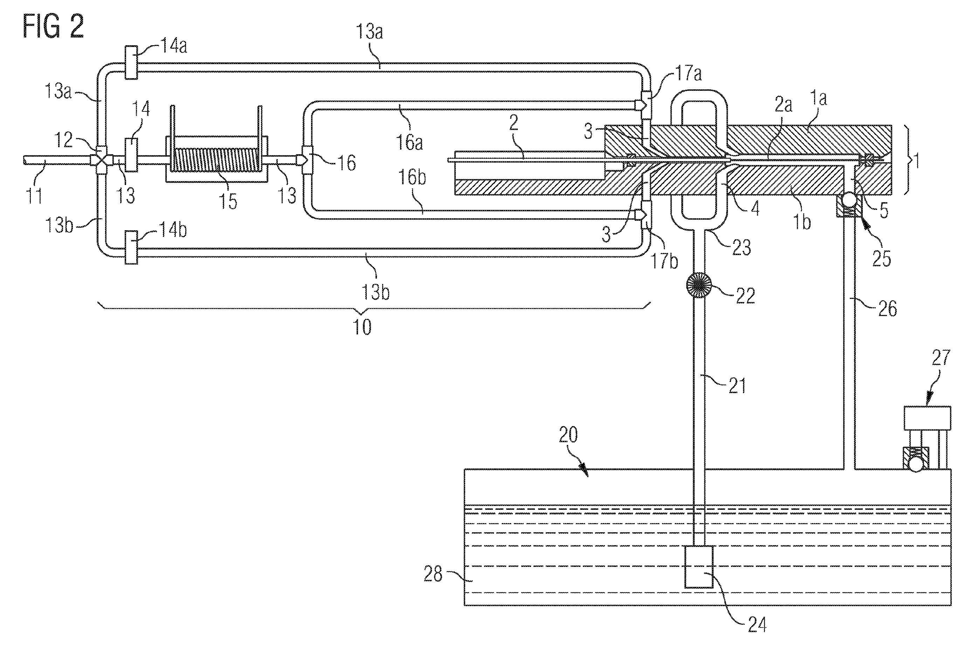

Die in Figur 1 dargestellte Behandlungszelle 1 ist zweistückig ausgebildet und umfasst ein Oberteil 1a und ein Unterteil 1b. Das Oberteil 1a ist mittels einer nicht dargestellten Scharnierverbindung an dem Unterteil 1b schwenkbar befestigt. Bei einem Öffnen des Oberteils 1a kann ein Lichtwellenleiter 2 derart in die Behandlungszelle 1 eingelegt werden, dass sich bei einem nachfolgenden Schließen des Oberteils 1a ein Lichtwellenleiter-Endabschnitt 2a, welcher von seiner Ummantelung befreit worden ist, in einer Reinigungskammer 4b befindet. Dichtungen 6 und 7 dienen der Fixierung des Lichtwellenleiters 2 in einer mittigen Position der bevorzugt zylindersymmetrisch ausgebildeten Behandlungszelle 1. Die Dichtungen 6 und 7 dienen ferner einer Abtrennung der Reinigungskammer 4b von der die Behandlungszelle 1 umgebenden Umgebung. Die Behandlungszelle 1 weist einen ersten Einlass auf, welcher zwei erste Einlassöffnungen 3 umfasst, die über jeweils einen Kanal 3a mit einem zylindrischen Hohlraum 3b verbunden sind, in welchem ein ummantelter Abschnitt des Lichtwellenleiters 2 aufnehmbar ist, welcher Abschnitt dem von seiner Ummantelung befreiten Lichtwellenleiter-Endabschnitt 2a benachbart ist. Die ersten Einlassöffnungen 3 sind auf einander gegenüberliegenden Seiten des Lichtwellenleiters 2 angeordnet und dienen der Zuführung von Druckluft. Die Beaufschlagung von Druckluft wird weiter unten anhand von Figur 2 beschrieben.

Die Behandlungszelle 1 umfasst ferner einen zweiten Einlass zum Zuführen von Reinigungsflüssigkeit, welcher zwei zweite Einlassöffnungen 4 umfasst. Die Einlassöffnungen 4 sind ebenfalls auf einander gegenüberliegenden Seiten des Lichtwellenleiters 2 bzw. des Lichtwellenleiter-Endabschnitts 2a angeordnet. Die beiden zweiten Einlassöffnungen 4 sind über jeweils einen Kanal 4a mit der Reinigungskammer 4b verbunden. Der zweite Einlass dient dem Zuführen von Reinigungsflüssigkeit, welches Zuführen ebenfalls weiter unten anhand von Figur 2 beschrieben wird.

Die Behandlungszelle 1 weist ferner eine Auslassöffnung 5 auf, durch welche sowohl über den ersten Einlass zugeführte Druckluft als auch über den zweiten Einlass zugeführte Reinigungsflüssigkeit aus der Reinigungskammer 4b entweichen kann.

Figur 2 zeigt die Behandlungszelle 1 in einer Reinigungsvorrichtung, welche ein Druckluft-Zuführungssystem 10 sowie ein geschlossenes Kreislaufsystem für die Reinigungsflüssigkeit 28 aufweist.

Das Druckluft-Zuführungssystem 10 umfasst eine Druckluftleitung 11, welche mit einem herkömmlichen Kompressor (nicht dargestellt) gekoppelt ist. Die Druckluftleitung 11 mündet über eine Verzweigung 12 in eine Druckluftleitung 13, eine Druckluftleitung 13a und eine Druckluftleitung 13b. In jeder der drei Druckluftleitungen 13, 13a und 13b ist jeweils ein Steuerventil 14, 14a bzw. 14b vorgesehen, mittels welchen die jeweilige Druckluftdurchfluss durch eine entsprechende Ansteuerung der Steuerventile 14, 14a bzw. 14b durch eine nicht dargestellte Druckluft-Steuerungseinrichtung individuell gesteuert werden kann. Die beiden Druckluftleitungen 13a und 13b sind jeweils mit einer ersten Einlassöffnung 3 der Behandlungszelle 1 verbunden und dienen der Zuführung von kalter Druckluft in den zylindrischen Hohlraum 3b. Die Druckluftleitung 13 ist mit einer Heizeinrichtung 15 thermisch gekoppelt, so dass die Druckluft, welche stromabwärts der Heizeinrichtung 15 über eine T-förmige Verzweigung 16 in die beiden Druckluftleitungen 16a und 16b mündet, entsprechend erhitzbar ist. Die Druckluftleitung 16a ist über die T-förmige Verzweigung 17a und die Druckluftleitung 16b ist über die T-förmige Verzweigung 17b mit einer der beiden ersten Einlassöffnungen 3 verbunden. Somit kann durch eine entsprechende Ansteuerung der Steuerventile 14, 14a und 14b das Mischungsverhältnis zwischen erhitzter Druckluft und kalter Druckluft beliebig eingestellt werden.

Die Reinigungsvorrichtung umfasst ferner einen geschlossenen Reinigungsmittel-Kreislauf mit einem Behälter 20, welcher der Aufnahme der Reinigungsflüssigkeit 28 dient. Die Reinigungsflüssigkeit 28 weist bevorzugt Alkohol auf. Der Behälter 20 ist über eine Flüssigkeitsleitung 21 und über eine T-förmige Verzweigung 23 mit den beiden zweiten Einlassöffnungen 4 verbunden. Die Flüssigkeitsleitung 21 ist mit einer Pumpe 22 versehen, mittels welcher die Reinigungsflüssigkeit 28 in die Reinigungskammer 2b gefördert werden kann. Ein Filter 24, welcher sich an dem Ende der Flüssigkeitsleitung 21 befindet, welches in die Flüssigkeit 28 eingetaucht ist, verhindert eine Zuführung von mit Schmutzpartikeln in die Reinigungskammer 4b der Behandlungszelle 1. Von dem Filter 24 werden insbesondere Reste von Lichtwellenleiter-Ummantelungen herausgefiltert, welche bei zuvor durchgeführten Reinigungsvorgängen von Lichtwellenleiter-Endabschnitten 2a entfernt wurden.

Der Auslass 5 der Behandlungszelle 1 ist mit einem Auslassventil 25 versehen, welches ein Austreten von Reinigungsflüssigkeit 28 bzw. Druckluft erst ab einem bestimmten Mindestdruck in der Reinigungskammer 4b ermöglicht. Das Auslassventil 25 ist über eine Auslassleitung 26 mit dem Behälter 20 verbunden und bildet somit zusammen mit der Flüssigkeitsleitung 21 einen geschlossenen Flüssigkeitskreislauf, welcher ein Wiederverwenden der Reinigungsflüssigkeit 28 für eine Vielzahl von Reinigungsvorgängen ermöglicht. Die aus der Behandlungszelle 1 über die Auslassleitung 26 austretende Druckluft wird ebenfalls dem Behälter 20 zugeführt. Dieser ist jedoch mit einem Dampfabscheider 27 versehen, so dass die Druckluft ohne ein gleichzeitiges Austreten von gegebenenfalls giftigen Dämpfen aus dem Behälter 20 entweichen kann.

Eine optimale Vorbereitung eines Lichtwellenleiters 2 für einen nachfolgenden Spleißvorgang kann dadurch erzielt werden, dass die Reinigungsflüssigkeit 28 unter einem schrägen Winkel von bevorzugt 30° relativ zu der Längsachse des Lichtwellenleiters 2 auf den Lichtwellenleiter-Endabschnitt 2a gespritzt wird. Eine optimale Vorbereitung erfordert ferner, dass nach dem Anspritzen des Lichtwellenleiter-Endabschnitts 2a ein etwas größerer Bereich des Lichtwellenleiters 2, welcher neben dem Lichtwellenleiter-Endabschnitt 2a noch einen benachbarten ummantelten Bereich des Lichtwellenleiters 2 umfasst, mit zunächst warmer und danach kalter Druckluft beaufschlagt wird. Die Beaufschlagung mit warmer Druckluft führt sowohl zu einem Trocknen des Lichtwellenleiter-Endabschnitts 2a als auch zu einer Erwärmung der in dem zylindrischen Hohlraum 3b befindlichen Ummantelung des Lichtwellenleiters 2, so dass auf einfache Weise innere Spannungen in der Ummantelung des Lichtwellenleiters 2 abgebaut werden können. Die nachfolgende Beaufschlagung mit kalter Druckluft bewirkt ein Abkühlen des Lichtwellenleiters sowie gegebenenfalls ein Ausblasen von eventuell vorhandenen Resten von flüssige oder gasförmigen Reinigungsmitteln.

In diesem Zusammenhang wird darauf hingewiesen, dass während des Zuführens von Reinigungsflüssigkeit 28 die Druckluftbeaufschlagung durch eine entsprechende Ansteuerung der Steuerventile 14, 14a und 14b unterbrochen und umgekehrt bei einer Druckluftbeaufschlagung die Reinigungsmittelzufuhr durch ein Abschalten der Pumpe 22 unterbrochen wird. Bei einer derartigen Vorgehensweise kommt eine Bedienperson auch bei dem Einlegen bzw. Herausnehmen des Lichtwellenleiters 2 in die oder aus der Behandlungszelle 1 niemals in Kontakt mit der Reinigungsflüssigkeit 28 oder mit entsprechenden Dämpfen der Reinigungsflüssigkeit 28.

### Zusammenfassend bleibt festzustellen:

Die Erfindung schafft ein Verfahren zum Reinigen eines von seiner Ummantelung befreiten Abschnitts 2a eines Lichtwellenleiters 2, bei dem der Lichtwellenleiter-Abschnitt 2a in eine Behandlungszelle 1 eingelegt wird, mit einer Reinigungsflüssigkeit 28 abgespritzt wird, mit Druckluft abgeblasen wird und aus der Behandlungszelle 1 entnommen wird. Das erfindungsgemäße Verfahren ermöglicht eine Reinigung unter genau definierten Bedingungen, welche in einer entsprechenden Vorrichtung auf einfache Weise durchgeführt werden kann. Bevorzugt umfasst das Anblasen des Lichtwellenleiter-Abschnitts 2a mit Druckluft zunächst eine Beaufschlagung mit erhitzter Druckluft und nachfolgend eine Beaufschlagung mit kalter Druckluft. Die Erfindung schafft ferner eine entsprechende Reinigungsvorrichtung mit einer Behandlungszelle 1 zum Aufnehmen des Lichtwellenleiter-Abschnitts 2a, welche Behandlungszelle 1 einen ersten Einlass 3 zum Zuführen von Druckluft, einen zweiten Einlass 4 zum Zuführen von Reinigungsflüssigkeit 28 und einen Auslass 5 zum Abführen von Druckluft und Reinigungsflüssigkeit 28 aufweist. Die Reinigungsvorrichtung ist bevorzugt als von der Umgebung abgetrenntes System ausgebildet, so dass ein Entweichen von gegebenenfalls giftigen flüssigen oder dampfförmigen Reinigungsmitteln und somit eine Gefährdung der Gesundheit einer Bedienperson zuverlässig ausgeschlossen ist.

## Patentansprüche

1. Verfahren zum Reinigen eines von seiner Ummantelung befreiten Abschnitts (2a) eines Lichtwellenleiters (2), bei dem
• der Lichtwellenleiter-Abschnitt (2a) in eine Behandlungszelle (1) eingelegt wird,
• der eingelegte Lichtwellenleiter-Abschnitt (2a) mit einer Reinigungsflüssigkeit (28) angespritzt wird,
• der angespritzte Lichtwellenleiter-Abschnitt (2a) mit Druckluft angeblasen wird, welche im Vergleich zu dem Druck in der Behandlungszelle (1) einen Überdruck aufweist,
• der angeblasene Lichtwellenleiter-Abschnitt (2a) aus der Behandlungszelle (1) entnommen wird.

2. Verfahren nach Anspruch 2, bei dem
eine geschlossene Behandlungszelle (1) verwendet wird.

3. Verfahren nach einem der Ansprüche 1 bis 2, bei dem
als Reinigungsflüssigkeit (28) Alkohol verwendet wird.

4. Verfahren nach einem der Ansprüche 1 bis 3, bei dem
die Reinigungsflüssigkeit (28) relativ zu der Längsachse des Lichtwellenleiter-Abschnitts (2a) unter einem schrägen Winkel, insbesondere unter einem Winkel von 10° bis 60° angespritzt wird.

5. Verfahren nach einem der Ansprüche 1 bis 4, bei dem
zumindest 3 ccm, insbesondere zumindest 6 ccm Reinigungsflüssigkeit (28) verwendet wird.

6. Verfahren nach einem der Ansprüche 1 bis 5, bei dem
der angespritzte Lichtwellenleiter-Abschnitt (2a) mit erhitzter Druckluft angeblasen wird.

7. Verfahren nach Anspruch 6, bei dem
nach dem Anblasen mit erhitzter Druckluft
der Lichtwellenleiter-Abschnitt (2a) mit kalter Druckluft angeblasen wird.

8. Vorrichtung zum Reinigen eines von seiner Ummantelung befreiten Abschnitts (2a) eines Lichtwellenleiters (2) zur Durchführung des Verfahrens nach einem der Ansprüche 1 bis 7, mit
einer Behandlungszelle (1) zum Aufnehmen des Lichtwellenleiter-Abschnitts (2a), wobei die Behandlungszelle (1) aufweist
• einen ersten Einlass (3) zum Zuführen von Druckluft, welche im Vergleich zu dem Druck in der Behandlungszelle (1) einen Überdruck aufweist,
• einen zweiten Einlass (4) zum Zuführen von Reinigungsflüssigkeit (28) und
• einen Auslass (5) zum Abführen von Druckluft und Reinigungsflüssigkeit (28).

9. Vorrichtung nach Anspruch 8, bei der
die Behandlungszelle (1) als von der Umgebung abgetrenntes System ausgebildet ist.

10. Vorrichtung nach einem der Ansprüche 8 bis 9, bei der
die Behandlungszelle (1) zumindest zweistückig ausgebildet ist.

11. Vorrichtung nach einem der Ansprüche 8 bis 10, bei der
der erste Einlass zumindest zwei erste Einlassöffnungen (3) aufweist, welche um die Längsachse des Lichtwellenleiter-Abschnitts (2a) herum angeordnet sind.

12. Vorrichtung nach einem der Ansprüche 8 bis 11, bei der
der zweite Einlass zumindest zwei zweite Einlassöffnungen (4) aufweist, welche um die Längsachse des Lichtwellenleiter-Abschnitts (2a) herum angeordnet sind.

13. Vorrichtung nach einem der Ansprüche 8 bis 12, zusätzlich mit
• einer Heißluft-Druckluftzuführung zum Zuführen von erhitzter Druckluft,
• einer Kaltluft-Druckluftzuführung zum Zuführen von kalter Druckluft,
wobei die beiden Druckluftzuführungen jeweils mit dem ersten Einlass (3) gekoppelt sind, und
• einer Druckluft-Steuereinrichtung zum Steuern des Mischungsverhältnisses zwischen erhitzter Druckluft und kalter Druckluft.

14. Vorrichtung nach einem der Ansprüche 8 bis 13, zusätzlich mit
einem Auffangbehälter (20) zum Aufnehmen von Reinigungsflüssigkeit (28), welcher mit dem zweiten Einlass (4) und dem Auslass (5) gekoppelt ist.

15. Vorrichtung nach Anspruch 14, bei der
der Auffangbehälter (20) ein von der Umgebung abgetrenntes System ist und
der Auffangbehälter (20) mit einem Dampfabscheider (27) versehen ist.
